# EUROPÄISCHE PATENTSCHRIFT

(11) **EP 4 063 166 B1**
(45) Veröffentlichungstag und Bekanntmachung des Hinweises auf die Patenterteilung: **10.09.2025**
(21) Anmeldenummer: 21210788.2
(22) Anmeldetag: 26.11.2021
(51) Int. Cl.: B60K 35/10, B60K 35/28

(54) **LANDWIRTSCHAFTLICHE ARBEITSMASCHINE**
AGRICULTURAL MACHINE
ENGIN DE TRAVAIL AGRICOLE

(30) Priorität: 24.03.2021 DE 102021107390
(43) Veröffentlichungstag der Anmeldung: 28.09.2022
(73) Patentinhaber: CLAAS E-Systems GmbH, 49201 Dissen (DE)
(72) Erfinder: Reinecke, Max, 33775 Versmold (DE)
(74) Vertreter: CLAAS Gruppe

(56) Entgegenhaltungen:
- EP-A1- 3 437 929
- EP-A1- 3 474 268
- EP-A1- 3 770 898
- WO-A2-2016/024405
- US-A1- 2015 029 013

## Beschreibung

Die vorliegende Erfindung betrifft eine landwirtschaftliche Arbeitsmaschine gemäß dem Oberbegriff von Anspruch 1.

Der bekannte Stand der Technik (WO 2017/058553 A1), von dem die Erfindung ausgeht, betrifft eine landwirtschaftliche Arbeitsmaschine gemäß dem Oberbegriff von Anspruch 1.

Bei der in Rede stehenden landwirtschaftlichen Arbeitsmaschine kann es sich um jedwede landwirtschaftliche Arbeitsmaschine handeln, die der Abarbeitung eines landwirtschaftlichen Arbeitsprozesses, beispielsweise einem Bodenbearbeitungs- oder Ernteprozess, dient. Dazu gehören beispielsweise Zugmaschinen, insbesondere Traktoren, aber auch selbstfahrende Erntemaschinen wie Mähdrescher, Feldhäcksler oder dergleichen.

Die bekannte landwirtschaftliche Arbeitsmaschine weist ein Fahrerassistenzsystem mit einer Rechenvorrichtung und einer Anzeigeeinheit mit einem Anzeigebereich auf. Ein Fahrer einer landwirtschaftlichen Arbeitsmaschine muss während des landwirtschaftlichen Arbeitsprozesses in viele Richtungen sehen, um Informationen aus der Umwelt wahrzunehmen. Beispiele dafür sind ein Überladen von einer Erntemaschine auf ein parallel fahrendes Transportfahrzeug, eine zu überwachende Bodenbearbeitung beim Traktor oder zu überwachendes einzulagerndes Gut bei Frontladerarbeiten.

Gleichzeitig muss der Fahrer Prozessparameter im Blick behalten und/oder über den Wechsel von Zuständen der Prozessparameter informiert werden. Diese Informationen werden typischerweise in einem Display, Dashboard oder einem anderen ortsfest angebrachten Anzeigegerät (bspw. Leuchtdioden) angezeigt. Im Falle einer Warnung oder Fehlermeldung kann ein akustischer Warnton, ausgegeben, um die Aufmerksam des Bedieners auf das Anzeigegerät zu lenken, wo die detaillierten Informationen dargestellt werden.

Das bedeutet, dass sich der Fahrer je nach prozessbedingter Blickrichtung, drehen muss, um die für ihn relevanten Information zu erfassen. Dies kann ergonomisch ungünstig sein und zu Zeitverzögerungen führen.

Bei der bekannten landwirtschaftlichen Arbeitsmaschine werden diverse für den Betrieb der landwirtschaftlichen Arbeitsmaschine relevante, beispielsweise ein Arbeitsaggregat betreffende, Informationen so in dem Anzeigebereich platziert, dass diese nach Art eines virtuellen Overlays über den zugehörigen Arbeitsaggregaten oder dergleichen platziert sind. Nebenbei können auch Informationen wie eine Motortemperatur, die ein Fahrer immer im Blickfeld haben möchte, abhängig von einer Kopfdrehung des Fahrers positioniert werden. Dreht der Fahrer den Kopf, folgen die Informationen der Drehung.

Es ist dabei jedoch ein Problem, dass die Ausrichtung des Kopfes nur sehr rudimentär mit der Blickrichtung zusammenhängt. Beispielsweise bei einem Blick über die Schulter fallen Blickrichtung und Ausrichtung des Kopfes häufig auseinander. Somit werden bei dem bekannten Stand der Technik die Informationen in einem etwa mit der Ausrichtung des Kopfes zusammenfallenden Bildschirm platziert. Relevante Informationen können daher vom Fahrer teilweise nicht gesehen werden oder befinden sich an unergonomischen Stellen. Sofern nicht mehrere Bildschirme vorhanden sind oder diese stark voneinander abweichen, versagt das System ganz.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass es für eine effiziente Darstellung von Informationen auf die Blickrichtung des Fahrers ankommt. Werden Informationen abhängig von der Blickrichtung eines Fahrers dargestellt, können diese unabhängig von Bildschirmgrenzen so platziert werden, dass sie für den Fahrer verfügbar sind und gleichzeitig nicht stören.

Im Einzelnen wird vorgeschlagen, dass das Fahrerassistenzsystem Sensorik zur Detektion einer Blickrichtung eines Fahrers der landwirtschaftlichen Arbeitsmaschine aufweist, dass das Fahrerassistenzsystem die Blickrichtung des Fahrers mittels der Sensorik detektiert und dass das Fahrerassistenzsystem den Informationsausschnitt abhängig von der Blickrichtung des Fahrers in dem Anzeigebereich positioniert.

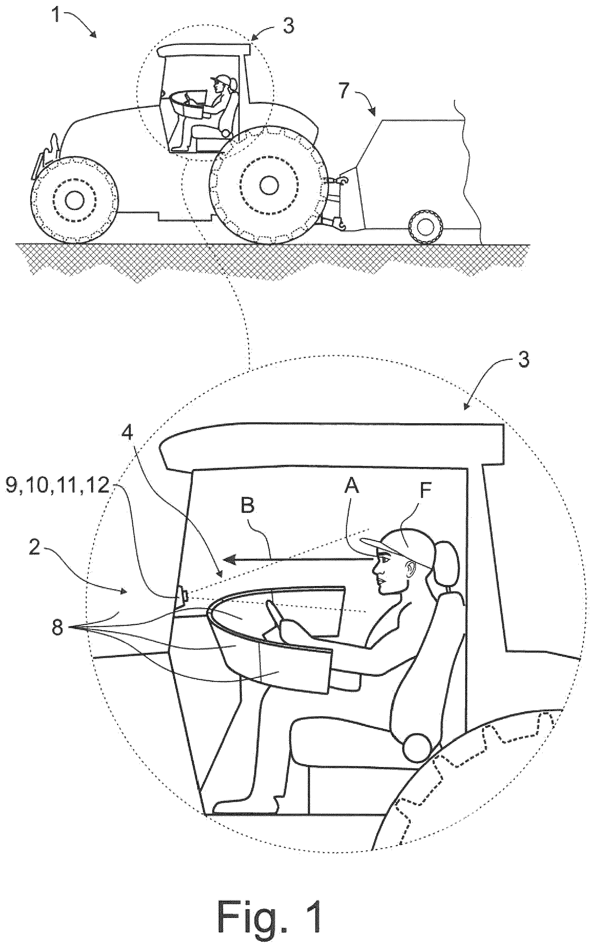

Im Folgenden wird die Erfindung anhand einer lediglich Ausführungsbeispiele darstellenden Zeichnung näher erläutert. In der Zeichnung zeigt
- Fig. 1: eine schematische Seitenansicht einer landwirtschaftlichen Arbeitsmaschine und
- Fig. 2: eine schematische Ansicht eines Anzeigebereichs der landwirtschaftlichen Arbeitsmaschine.

Die Zeichnung zeigt eine landwirtschaftliche Arbeitsmaschine 1 zur Durchführung eines landwirtschaftlichen Arbeitsprozesses, mit einem Fahrerassistenzsystem 2 und einer Fahrerkabine 3, wobei das Fahrerassistenzsystem 2 eine Anzeigeeinheit 4 aufweist, wobei die Anzeigeeinheit 4 einen Anzeigebereich 5 aufweist, wobei das Fahrerassistenzsystem 2 den landwirtschaftlichen Arbeitsprozess betreffende Informationen in mindestens einem variablen Informationsausschnitt 6 des Anzeigebereichs 5 darstellt.

Landwirtschaftliche Arbeitsmaschinen 1 weisen häufig ein oder mehrere Arbeitsaggregate 7 zur Durchführung oder Unterstützung des landwirtschaftlichen Arbeitsprozesses auf. Bei einer Erntemaschine zählen dazu beispielsweise die Einzugseinrichtung, das Dresch- oder Häckselwerk, die Überladeeinrichtung, aber auch der Fahrantrieb und die Lenkeinrichtung. Eine landwirtschaftliche Arbeitsmaschine kann auch mit Arbeitsorganen in Form von Anbaugeräten, die an das Trägerfahrzeug angebaut sind, ausgestattet sein. Bei einer Erntemaschine zählen dazu beispielsweise Vorsatzgeräte wie Schneid-oder Mähwerke, Maisgebisse oder dergleichen. Bei einer Zugmaschine kann als Anbaugerät beispielsweise ein Mähwerk, ein Wender, ein Schwader, eine Ballenpresse oder ein Bodenbearbeitungsgerät wie ein Pflug, ein Grubber, eine Egge oder dergleichen vorgesehen sein.

Vorliegend weist die Anzeigeeinheit 4 vorzugsweise mindestens einen in oder an der Fahrerkabine 3 angeordneten Bildschirm 8, vorzugsweise mindestens zwei Bildschirme 8 und/oder mindestens einen gebogenen Bildschirm 8, auf, der bzw. die den Anzeigebereich 5 bilden. Genauso sind jedoch auch Projektionen in einer Scheibe oder ähnliches denkbar, die den Anzeigebereich 5 bilden.

Das Fahrerassistenzsystem 2 kann lokal auf der landwirtschaftlichen Erntemaschine und/oder in der Cloud angeordnet sein und Software und Hardware umfassen.

Der Informationsausschnitt 6 stellt Informationen dar und kann interaktiv ausgestaltet sein. Der Informationsausschnitt 6 kann Einstellungen darstellen, die bspw. an einem Touchscreen verändert werden können. Insbesondere kann es sich bei den dargestellten Informationen um Prozessparameter handeln.

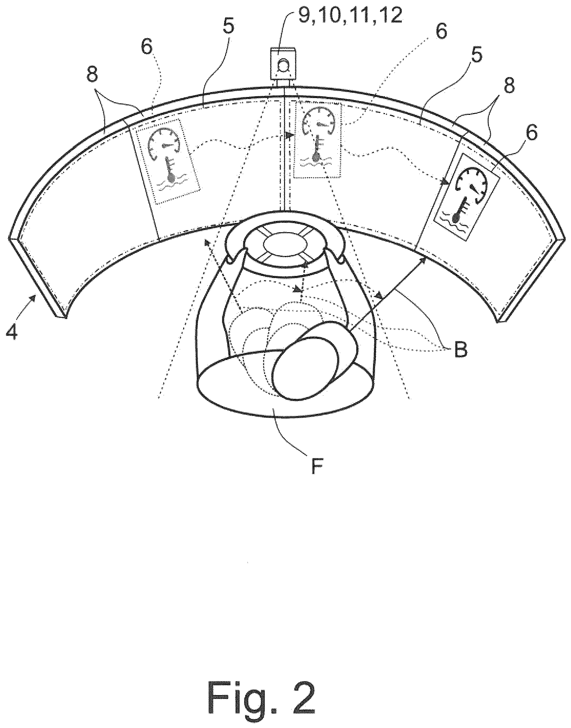

Wesentlich ist nun, dass das Fahrerassistenzsystem 2 Sensorik 9 zur Detektion einer Blickrichtung B eines Fahrers F der landwirtschaftlichen Arbeitsmaschine 1 aufweist, dass das Fahrerassistenzsystem 2 die Blickrichtung B des Fahrers F mittels der Sensorik 9 detektiert und dass das Fahrerassistenzsystem 2 den Informationsausschnitt 6 abhängig von der Blickrichtung B des Fahrers F in dem Anzeigebereich 5 positioniert. Dieser Ablauf ist in Fig. 2 schematisch dargestellt.

Der Informationsausschnitt 6 kann beispielsweise ein Fenster oder ähnliches auf dem bzw. einem der Bildschirme 8 sein, jedoch genauso durch jegliche andere Darstellungsart gebildet werden. Es handelt sich dabei jedoch vorzugsweise nicht um einen vollständigen Bildschirminhalt, der nur zwischen Bildschirmen 8 wechselt. Vorzugsweise wird der Informationsausschnitt 6 abhängig von der Blickrichtung B des Fahrers F auf einem Bildschirm 8 und innerhalb eines Bildschirms 8 positioniert. Der Informationsausschnitt 6 kann also vorzugsweise mehrere Positionen auf einem Bildschirm 8 oder, wenn vorhanden, mehreren Bildschirmen 8 einnehmen.

Bei dem in den Figuren dargestellten und insoweit bevorzugten Ausführungsbeispiel ist ferner vorgesehen, dass die Sensorik 9 einen optischen Sensor 10, insbesondere eine Kamera und/oder einen Lasersensor, und/oder einen Radarsensor 11 und/oder einen Ultraschallsensor 12 zur Detektion der Blickrichtung B des Fahrers F aufweist, vorzugsweise, dass die Sensorik 9 eine Position und/oder Ausrichtung mindestens eines Auges A des Fahrers F detektiert. In der Zeichnung ist nur ein Sensor 10, 11, 12 stellvertretend für die unterschiedlichen denkbaren Arten von Sensoren 10, 11, 12 dargestellt.

Zusätzlich kann ein mechanischer Sensor 13, insbesondere Gewichts-Sensor und/oder Positions-Sensor, in einem Sitz des Fahrers F integriert sein und die Detektion der Blickrichtung B des Fahrers F unterstützen.

Weiter ist hier und vorzugsweise vorgesehen, dass das Fahrerassistenzsystem 2 den Informationsausschnitt 6 regelmäßig und/oder ereignisbasiert abhängig von der Blickrichtung B des Fahrers F in dem Anzeigebereich 5 neu positioniert, vorzugsweise, dass der Informationsausschnitt 6 der Blickrichtung B des Fahrers F folgt.

Vorzugsweise wechselt der Informationsausschnitt 6 dabei, jedenfalls manchmal, den Bildschirm 8.

Das Folgen der Blickrichtung B kann verzögert stattfinden oder erst bei einem Verweilen der Blickrichtung B in einem Bereich für einen vorgegebenen Zeitraum ausgelöst werden. So werden schnell hin und her wechselnde Informationsausschnitte 6 vermieden.

Ein eine Neupositionierung auslösendes Ereignis kann eine Warnmeldung und/oder eine Fehlermeldung sein. Es kann vorgesehen sein, dass ein Informationsausschnitt 6 in Reaktion auf ein Ereignis, insbesondere eine Warn- und/oder Fehlermeldung, automatisch so im Anzeigebereich 5 platziert wird, dass der Fahrer F diesen wahrnehmen kann. So können Warnungen visuell erfolgen und direkt wahrgenommen werden. Auch eine Darstellung des Informationsausschnittes 6 in einer vorgegebenen Farbe und/oder Größe oder dergleichen, insbesondere einer Signalfarbe, kann vorgesehen sein.

Darüber hinaus ist hier und vorzugsweise vorgesehen, dass im Fahrerassistenzsystem 2 voreingestellte Informationen zu unterschiedlichen Arbeitsprozessen hinterlegt sind, die bei der Durchführung des jeweiligen Arbeitsprozesses in dem Informationsausschnitt 6 dargestellt werden, vorzugsweise, dass die Informationen zu den unterschiedlichen Arbeitsprozessen abhängig vom jeweiligen Fahrer F der landwirtschaftlichen Arbeitsmaschine 1 hinterlegt sind, weiter vorzugsweise, dass der jeweilige Fahrer F die in dem Informationsausschnitt 6 dargestellten Informationen personalisieren und in dem Fahrerassistenzsystem 2 für zukünftige Arbeitsprozesse hinterlegen kann.

Alle Ausführungen zu einem Informationsausschnitt 6 können auch für mehrere vorschlagsgemäße Informationsausschnitte 6 gelten. Es ist vorstellbar, dass häufig mehrere derartige Informationsausschnitte 6 aktiv sind.

Weiterhin kann vorgesehen sein, dass das Fahrerassistenzsystem 2 abhängig von einer Position des Informationsausschnittes 6 und/oder des Anzeigebereichs 5 relativ zur Blickrichtung B des Fahrers F Informationen in dem Informationsausschnitt 6 unterschiedlich, insbesondere in einer anderen Größe, insbesondere Schriftgröße, und/oder in einem anderen Detailgrad darstellt, vorzugsweise, dass das Fahrerassistenzsystem 2 Informationen im peripheren Sichtbereich der Blickrichtung B des Fahrers F weniger detailliert und/oder größer darstellt.

### Bezugszeichenliste

- 1: landwirtschaftliche Arbeitsmaschine
- 2: Fahrerassistenzsystem
- 3: Fahrerkabine
- 4: Anzeigeeinheit
- 5: Anzeigebereich
- 6: Informationsausschnitt
- 7: Arbeitsaggregate
- 8: Bildschirm
- 9: Sensorik
- 10: optischer Sensor
- 11: Radarsensor
- 12: Ultraschallsensor
- 13: mechanischer Sensor
- F: Fahrer
- B: Blickrichtung des Fahrers
- A: Auge des Fahrers

## Patentansprüche

1. Landwirtschaftliche Arbeitsmaschine zur Durchführung eines landwirtschaftlichen Arbeitsprozesses, mit einem Fahrerassistenzsystem (2) und einer Fahrerkabine (3), wobei das Fahrerassistenzsystem (2) eine Anzeigeeinheit (4) aufweist,
wobei die Anzeigeeinheit (4) einen Anzeigebereich (5) aufweist, wobei das Fahrerassistenzsystem (2) den landwirtschaftlichen Arbeitsprozess betreffende Informationen, die Prozessparameter sind, in mindestens einem variablen Informationsausschnitt (6) des Anzeigebereichs (5) darstellt, wobei die Anzeigeeinheit (4) einen Bildschirm (8) aufweist,
wobei das Fahrerassistenzsystem (2) Sensorik (9) zur Detektion einer Blickrichtung (B) eines Fahrers (F) der landwirtschaftlichen Arbeitsmaschine (1) aufweist, wobei das Fahrerassistenzsystem (2) die Blickrichtung (B) des Fahrers (F) mittels der Sensorik (9) detektiert, und wobei das Fahrerassistenzsystem (2) den Informationsausschnitt (6) abhängig von der Blickrichtung (B) des Fahrers (F) in dem Anzeigebereich (5) positioniert,
**dadurch gekennzeichnet, dass**
der Informationsausschnitt (6) in Abhängigkeit der Blickrichtung (B) des Fahrers (F) innerhalb des Bildschirms (8) positioniert wird und
dass das Fahrerassistenzsystem (2) den Informationsausschnitt (6) regelmäßig und/oder ereignisbasiert abhängig von der Blickrichtung (B) des Fahrers (F) in dem Anzeigebereich (5) neu positioniert, vorzugsweise, dass der Informationsausschnitt (6) der Blickrichtung (B) des Fahrers (F) folgt.

2. Landwirtschaftliche Arbeitsmaschine nach Anspruch 1, **dadurch gekennzeichnet, dass** die Sensorik (9) einen optischen Sensor (10), insbesondere eine Kamera und/oder einen Lasersensor, und/oder einen Radarsensor (11) und/oder einen Ultraschallsensor (12) zur Detektion der Blickrichtung (B) des Fahrers (F) aufweist, vorzugsweise, dass die Sensorik (9) eine Position und/oder Ausrichtung mindestens eines Auges (A) des Fahrers (F) detektiert.

3. Landwirtschaftliche Arbeitsmaschine nach einem der vorhergehenden Ansprüche, **dadurch gekennzeichnet, dass** im Fahrerassistenzsystem (2) voreingestellte Informationen zu unterschiedlichen Arbeitsprozessen hinterlegt sind, die bei der Durchführung des jeweiligen Arbeitsprozesses in dem Informationsausschnitt (6) dargestellt werden, vorzugsweise, dass die Informationen zu den unterschiedlichen Arbeitsprozessen abhängig vom jeweiligen Fahrer (F) der landwirtschaftlichen Arbeitsmaschine (1) hinterlegt sind, weiter vorzugsweise, dass der jeweilige Fahrer (F) die in dem Informationsausschnitt (6) dargestellten Informationen personalisieren und in dem Fahrerassistenzsystem (2) für zukünftige Arbeitsprozesse hinterlegen kann.

4. Landwirtschaftliche Arbeitsmaschine nach einem der vorhergehenden Ansprüche, **dadurch gekennzeichnet, dass** das Fahrerassistenzsystem (2) abhängig von einer Position des Informationsausschnittes (6) und/oder des Anzeigebereichs (5) relativ zur Blickrichtung (B) des Fahrers (F) Informationen in dem Informationsausschnitt (6) unterschiedlich, insbesondere in einer anderen Größe, insbesondere Schriftgröße, und/oder in einem anderen Detailgrad darstellt, vorzugsweise, dass das Fahrerassistenzsystem (2) Informationen im peripheren Sichtbereich der Blickrichtung (B) des Fahrers (F) weniger detailliert und/oder größer darstellt.

## Claims

1. An agricultural working machine for carrying out an agricultural operating procedure, with a driver assistance system (2) and a driver's cabin (3), wherein the driver assistance system (2) has a display unit (4), wherein the display unit (4) has a display zone (5), wherein the driver assistance system (2) presents information which constitutes process parameters and pertains to the agricultural working procedure in at least one variable information section (6) of the display zone (5), wherein the display unit (4) has a screen (8),
wherein the driver assistance system (2) has sensor technology (9) for the detection of a viewing direction (B) of a driver (F) of the agricultural working machine (1), wherein the driver assistance system (2) detects the viewing direction (B) of the driver (F) by means of the sensor technology (9), and wherein the driver assistance system (2) positions the information section (6) in the display zone (5) as a function of the viewing direction (B) of the driver (F),
**characterized in that**
the information section (6) is positioned within the screen (8) as a function of the viewing direction (B) of the driver (F) and **in that** the driver assistance system (2) positions the information section (6) anew in the display zone (5) as a function of the viewing direction (B) of the driver (F) on a regular basis and/or on the basis of events, preferably **in that** the information section (6) follows the viewing direction (B) of the driver (F).

2. The agricultural working machine according to claim 1, **characterized in that** the sensor technology (9) has an optical sensor (10), in particular a camera and/or a laser sensor, and/or a radar sensor (11) and/or an ultrasonic sensor (12) for detecting the viewing direction (B) of the driver (F), preferably **in that** the sensor technology (9) detects a position and/or orientation of at least one eye (A) of the driver (F).

3. The agricultural working machine according to one of the preceding claims, **characterized in that** preset information in respect of different working procedures which is presented in the information section (6) when the respective working procedure is being carried out is stored in the driver assistance system (2), preferably **in that** the information in respect of the different working procedures is stored as a function of the respective driver (F) of the agricultural working machine (1), more preferably **in that** the respective driver (F) can personalise the information presented in the information section (6) and can store it in the driver assistance system (2) for future working procedures.

4. The agricultural working machine according to one of the preceding claims, **characterized in that** the driver assistance system (2) presents information in the information section (6) differently as a function of a position of the information section (6) and/or of the display zone (5) relative to the viewing direction (B) of the driver (F), in particular in a different size, in particular character size, and/or in a different level of detail, preferably **in that** the driver assistance system (2) presents information in the peripheral field of vision of the viewing direction (B) of the driver (F) in less detail and/or enlarged.

## Revendications

1. Engin de travail agricole destiné à exécuter un processus de travail agricole, comprenant un système d'assistance au conducteur (2) et une cabine de conduite (3), le système d'assistance au conducteur (2) présentant une unité d'affichage (4), l'unité d'affichage (4) présentant une zone d'affichage (5), le système d'assistance au conducteur (2) représentant des informations concernant le processus de travail agricole, qui sont des paramètres de processus, dans au moins une section d'informations (6) variable de la zone d'affichage (5), l'unité d'affichage (4) comprenant un écran (8), le système d'assistance au conducteur (2) présentant un système de capteur (9) destiné à la détection d'une direction de regard (B) d'un conducteur (F) de l'engin de travail agricole (1), le système d'assistance au conducteur (2) détectant la direction du regard (B) du conducteur (F) à l'aide du système de capteur (9), et le système d'assistance au conducteur (2) positionnant la section d'informations (6) dans la zone d'affichage (5) en fonction de la direction du regard (B) du conducteur (F), **caractérisé en ce que** la section d'informations (6) est positionnée en fonction de la direction du regard (B) du conducteur (F) à l'intérieur de l'écran (8), et **en ce que** le système d'assistance au conducteur (2) repositionne la section d'informations (6) dans la zone d'affichage (5), régulièrement et/ou sur la base d'un événement, en fonction de la direction du regard (B) du conducteur (F), de préférence **en ce que** la section d'informations (6) suit la direction du regard (B) du conducteur (F).

2. Engin de travail agricole selon la revendication 1, **caractérisé en ce que** le système de capteur (9) présente un capteur optique (10), notamment une caméra et/ou un capteur laser, et/ou un capteur radar (11) et/ou un capteur d'ultrasons (12) en vue de la détection de la direction du regard (B) du conducteur (F), de préférence **en ce que** le système de capteur (9) détecte une position et/ou une orientation d'au moins un œil (A) du conducteur (F).

3. Engin de travail agricole selon une des revendications précédentes, **caractérisé en ce que** sont enregistrées dans le système d'assistance au conducteur (2), des informations préréglées pour des processus de travail différents, qui sont représentées dans la section d'informations (6) lors de l'exécution du processus de travail concerné, de préférence **en ce que** les informations relatives aux différents processus de travail sont enregistrées en fonction du conducteur (F) respectif de l'engin de travail agricole (1), en outre de préférence **en ce que** le conducteur (F) respectif peut personnaliser les informations représentées dans la section d'informations (6) et peut les enregistrer dans le système d'assistance au conducteur (2), en vue de processus de travail futurs.

4. Engin de travail agricole selon une des revendications précédentes, **caractérisé en ce que**, en fonction d'une position de la section d'informations (6) et/ou de la zone d'affichage (5) par rapport à la direction du regard (B) du conducteur (F), le système d'assistance au conducteur (2) représente des informations dans la section d'informations (6) de manière différente, en particulier avec des tailles et notamment des tailles de police différentes, et/ou avec un degré de détail différent, de préférence **en ce que** le système d'assistance au conducteur (2) représente de façon moins détaillée et/ou de façon agrandie les informations situées dans la zone de vision périphérique de la direction du regard (B) du conducteur (F).
